# EUROPEAN PATENT SPECIFICATION

(11) **EP 3 763 685 B1**
(45) Date of publication and mention of the grant of the patent: **02.02.2022**
(21) Application number: 20185123.5
(22) Date of filing: 10.07.2020
(51) Int. Cl.: C03C 8/04, C03C 8/08, C03C 8/16, C03C 3/064, C03C 3/066, C03C 27/02, F24C 15/00

(54) **ENAMEL COMPOSITION, METHOD FOR PREPARING ENAMEL COMPOSITION, AND COOKING APPLIANCE**
EMAILLEZUSAMMENSETZUNG, VERFAHREN ZUR HERSTELLUNG EINER EMAILLEZUSAMMENSETZUNG UND KOCHGERÄT
COMPOSITION D'ÉMAIL, PROCÉDÉ DE PRÉPARATION D'UNE COMPOSITION D'ÉMAIL ET APPAREIL DE CUISSON

(30) Priority: 10.07.2019 KR 20190083494
(43) Date of publication of application: 13.01.2021
(73) Proprietor: LG Electronics Inc., 07336 SEOUL (KR)
(72) Inventor: KIM, Ju Hyeong, 08592 Seoul (KR); SEO, Dongwan, 08592 Seoul (KR); KIM, Taeho, 08592 Seoul (KR); KIM, Taehee, 08592 Seoul (KR); LEE, Yongsoo, 08592 Seoul (KR)
(74) Representative: Ter Meer Steinmeister & Partner

(56) References cited:
- EP-A1- 0 453 897
- EP-A1- 2 662 339
- US-A1- 2011 049 122

## Description

### TECHNICAL FIELD

The present disclosure relates to an enamel composition, which may help to reduce time for cleaning thermal decomposition on a surface, a method for producing the enamel composition, and a cooking appliance including the enamel composition.

### BACKGROUND

Enamel may have a glass glaze and be applied onto a surface of a metallic plate. For example, the enamel may be used for cooking appliances, such as microwave ovens and ovens.

Cooking appliances, such as electric ovens and gas ovens, for example, are devices that may cook food or other items (hereinafter, collectively "food") using a heat source. In some cases, contaminants may be produced during cooking and attached to an inner wall of a cavity of the cooking appliance. Accordingly, the inner wall of the cavity needs to be cleaned. In some cases, enamel may be coated on a surface of the inner wall of the cavity of the cooking appliance to help to remove contaminants attached to the cooking appliance, as disclosed for example in EP0453897 A1 US2011/049122 A1 and EP2662339 A1.

In some examples, for cleaning the inner wall of the cavity, a process of pyrolysis (thermal decomposition) may be used to burn contaminants into ashes at high temperatures. In some cases, enamel compositions may components, such as phosphorus pentoxide (P₂O₅), silicon dioxide (SiO₂), and boron oxide (B₂O₃) to allow the process of pyrolysis.

In some cases, the enamel composition may be cleaned at a temperature of 450 to 500 °C for three hours. When an enamel coating layer is heated for a long time at high temperatures, its durability may be decreased. Additionally, the enamel composition of related art may consume a large amount of energy at the time of cleaning to be heated to high temperatures.

In some cases, contaminants such as fat including tallow, lard, and poultry fat may be difficult to remove from an enamel composition of the related art.

### SUMMARY

It is an object of the present disclosure to provide an enamel composition that may be cleaned at a lower temperature for a shorter period of time, and a method for forming the same.

It is an object of the present disclosure to provide an enamel composition that may help to remove contaminants such as fat, and a method for forming the same.

The objects are solved by the features of the independent claims.

In some implementations, the enamel composition may maximize vanadium pentoxide (V₂O₅) content.

When V₂O₅ content in an enamel composition increases, acid resistance of the enamel may decreases. In some implementations, the enamel composition optimize content ratios of aluminum oxide (Al₂O₃), zirconium dioxide (ZrO₂) and alkali metal oxide R₂O, for example. Accordingly, acid resistance of the enamel may increase.

According to one aspect of the subject matter described in this application, an enamel composition comprises or consists of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), and 10 to 25 wt% of vanadium pentoxide (V₂O₅).

Implementations according to this aspect may include one or more of the following features. For example, the enamel composition may further include 5 or less wt% of titanium dioxide (TiO₂), and 10 or less wt% of at least one of stannous oxide (SnO) or zinc oxide (ZnO). Further, the enamel composition may consist of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), 10 to 25 wt% of vanadium pentoxide (V₂O₅), 5 or less wt% of titanium dioxide (TiO₂), and 10 or less wt% of at least one of stannous oxide (SnO) or zinc oxide (ZnO). In some examples, the enamel composition may include 31 to 33 wt% of P₂O₅, 5.5 to 7 wt% of SiO₂, 16.5 to 18 wt% of Al₂O₃, 11 wt% of ZrO₂, 2 wt% of Li₂O, 6 wt% of Na₂O; 5 wt% of K₂O, 6.5 wt% B₂O₃, and 12.5 wt% V₂O₅.

In some examples, the enamel composition may further include 0.5 or less wt% of TiO₂, 1.5 or less wt% of SnO, and 1.5 or less wt% of ZnO.

According to another aspect, use of the enamel composition for forming a coating layer on an inner surface of a cavity of a cooking appliance, i.e. of a cooking chamber.

According to another aspect, a method for forming an enamel composition includes providing materials for forming the enamel composition, melting the materials, and cooling the melted materials in a quenching roller to thereby form the enamel composition. The enamel composition comprises or consists of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), and 10 to 25 wt% of vanadium pentoxide (V₂O₅).

Implementations according to this aspect may include one or more of the above features of the enamel composition or the following features. For example, the enamel composition may further include 5 or less wt% of titanium dioxide (TiO₂), and 10 or less wt% of at least one of stannous oxide (SnO) or zinc oxide (ZnO). Further, the enamel composition may consist of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), 10 to 25 wt% of vanadium pentoxide (V₂O₅), 5 or less wt% of titanium dioxide (TiO₂), and 10 or less wt% of at least one of stannous oxide (SnO) or zinc oxide (ZnO). In some examples, the enamel composition may include 31 to 33 wt% of P₂O₅, 5.5 to 7 wt% of SiO₂, 16.5 to 18 wt% of Al₂O₃, 11 wt% of ZrO₂, 2 wt% of U₂O, 6 wt% of Na₂O, 5 wt% of K₂O, 6.5 wt% B₂O₃, and 12.5 wt% V₂O₅. In some examples, the enamel composition may further include 0.5 or less wt% of TiO₂, 1.5 or less wt% of SnO, and 1.5 or less wt% of ZnO.

In some implementations, providing the materials may include providing raw materials that includes ammonium dihydrogen phosphate (NH₄H₂PO₄), potassium carbonate (K₂CO₃), and lithium carbonate (Li₂CO₃). In some examples, melting the materials may be performed at a temperature between 1200 °C and 1400 °C. In some examples, melting the materials is performed for one to two hours. In some examples, melting the materials is performed at 1300 °C for 1.5 hours.

In some implementations, the method may include mixing the enamel composition with an organic binder in a ball mill. In some implementations, the method may include mixing the enamel composition with water and a pigment in a ball mill.

According to another aspect, a cooking appliance includes a chamber surface that defines a cavity including a cooking chamber, a door that is configured to open and close the cavity and has a door surface configured to face the cavity, a heat source configured to supply heat to the cavity, and a coating layer disposed on the chamber surface or the door surface. The coating layer includes an enamel composition of materials comprising or consisting of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), and 10 to 25 wt% of vanadium pentoxide (V₂O₅).

Implementations according to this aspect may include one or more of the above features of the enamel composition or the following features. For example, the enamel composition may further include 5 or less wt% of titanium dioxide (TiO₂), and 10 or less wt% of at least one of stannous oxide (SnO) or zinc oxide (ZnO). Furthermore, the enamel composition may consist of 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), 10 to 25 wt% of vanadium pentoxide (V₂O₅), 5 or less wt% of titanium dioxide (TiO₂), and 10 or less wt% of at least one of stannous oxide (SnO) or zinc oxide (ZnO).

In some implementations, the cooking appliance may include a metal plate that defines the chamber surface, and the coating layer may be coated on the metal plate. In some implementations, the door may include a metal plate that defines the door surface, and the coating layer may be coated on the metal plate.

In some implementations, the cooking appliance may include a first metal plate that defines the chamber surface, and the door may include a second metal plate that defines the door surface, where the coating layer is coated on each of the first metal plate and the second metal plate.

In some implementations, the coating layer may be a single layer that is in direct contact with each of the first metal plate and the second metal plate.

In some implementations, the enamel composition may include a phosphate-based glass composition, such that the enamel composition is cleaned at a temperature, which is approximately 100 °C lower than a temperature of an enamel composition of the related art, for a period of time which is 1 to 2 hours shorter than a period of time of the enamel composition of the related art. Thus, the enamel composition according to the present disclosure may consume less energy than an enamel composition of the related art at the time of cleaning.

In some examples, the enamel composition may help to remove contaminants such as fat. Accordingly, the enamel composition may improve hygiene of a cooking appliance.

### BRIEF DESCRIPTION OF THE DRAWINGS

FIG. 1 is a front perspective view showing an example of a cooking appliance.
FIG. 2 is an enlarged cross-sectional view showing an example portion of an inner surface that defines a cavity of the cooking appliance in FIG. 1.
FIG. 3 is an enlarged cross-sectional view showing an example portion of an inner surface of a door of the cooking appliance in FIG. 1.

### DETAILED DESCRIPTION

The above-described aspects, features and advantages are specifically described with reference to the accompanying drawings hereunder such that one having ordinary skill in the art to which the present disclosure pertains may easily implement the technical idea of the disclosure. In description of the disclosure, detailed description of known technologies in relation to the disclosure is omitted if it is deemed to make the gist of the disclosure unnecessarily vague. Below, one or more examples according to the present disclosure are specifically described.

The examples in the present disclosure may be implemented in various different forms, and should not be construed as being limited to the present disclosure. Rather, these implementations are provided as examples so that the present disclosure will be thorough and complete and will fully convey the subject matter to one having ordinary skill in the art to which the present disclosure pertains. Below, an enamel composition, a method for preparing the enamel composition and a cooking appliance according to the present disclosure are described specifically.

One or more examples of an enamel composition will be described below.

In some implementations, an enamel composition may include or consist of: 30 to 45 wt% of phosphorus pentoxide (P₂O₅), 5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), and 10 to 25 wt% of vanadium pentoxide (V₂O₅).

P₂O₅ is a component that may form an alkali phosphate glass structure. P₂O₅ is also a glass former that helps addition of a large amount of transition metal oxides into an enamel composition, and helps water to permeate between an enamel surface and a contaminant such that the contaminant is easily removed. P₂O₅ is included in a range of 30 to 45 wt%. When more than 45 wt% of P₂O₅ is included, the enamel composition is hardly glazed, and thermal properties of the enamel composition may be deteriorated. Additionally, when less than 30 wt% of P₂O₅ is included, an amount of added transition metal oxides is reduced. Thus, a cleaning performance may be deteriorated.

SiO₂ is a component that may form a glass structure. SiO₂ reinforces a skeleton of the glass structure and enhances chemical resistance of the enamel composition. SiO₂ is included in a range of 5 to 20 wt%. When more than 20 wt% of SiO₂ is included, the component interferes with the addition of transition metal oxides, thereby deteriorating a cleaning performance. When less than 5 wt% of SiO₂ is included, glass composition may be collapsed.

B₂O₃ may serve as a glass former and help each component of the enamel composition to melt uniformly. B₂O₃ may enhances a coating performance by adjusting the coefficient of thermal expansion and the fusion flow of the enamel composition. B₂O₃ may be included in a range of 5 to 15 wt%. When more than 15 wt% of B₂O₃ is included, the component may interfere with the addition of other components, thereby deteriorating a cleaning performance. When less than 5 wt% of B₂O₃ is included, glass composition may be collapsed, and crystallization of a glass composition may occur.

Li₂O, Na₂O, and K₂O may improve a cleaning performance of the enamel composition. One or more of Li₂O, Na₂O, and K₂O are included in the enamel composition in a range of 5 to 20 wt%. When more than 20 wt% of the one or more of Li₂O, Na₂O and K₂O is included, the coefficient of thermal expansion of glass may be increased. Accordingly, a coating performance may be deteriorated. When less than 5 wt% of the one or more of Li₂O, Na₂O and K₂O is included, a cleaning performance may be deteriorated.

In some implementations, the enamel composition may include 15 to 35 wt% of Al₂O₃ Al₂O₃ may improve durability of an alkali phosphate glass structure and may enhance hardness of an enamel surface. When more than 35 wt% of Al₂O₃ is include, a melting point is pushed up, and fusion flow increases. Accordingly, adhesion of an enamel coating layer may decrease. When less than 15 wt% of Al₂O₃ is included, durability of the enamel coating layer may decrease.

ZrO₂ is a component that may enhance chemical durability and improves adhesion of an alkali phosphate glass structure. The enamel composition according to implementations may include 10 to 20 wt% of ZrO₂ When more than 20 wt% of ZrO₂ is included, adhesion of an enamel coating layer may decrease. When less than 10 wt% of ZrO₂ is included, chemical durability of glass may decrease.

V₂O₅ is a component that serves as a catalyst on a surface of an enamel coating layer and that facilitates carbonization of contaminants. Accordingly, V₂O₅ easily disconnects the contaminants from the surface of the enamel coating layer. According to implementations, V₂O₅ content is maximized such that cleaning is performed at low temperatures. The enamel composition according to implementations may include V₂O₅ in a range of 10 to 25 wt%. When less than 10 wt% of V₂O₅ is included, a rate of catalytic reactions on a surface of an enamel coating layer may decrease. Thus, a cleaning performance of the enamel may be deteriorated, and cleaning may not be performed at low temperatures. When more than 25 wt% of V₂O₅ is included, vitrification hardly occurs, and thermal properties may be degraded.

When V₂O₅ content increases in an enamel composition, acid resistance of the enamel may decrease. However, the enamel composition according to implementations includes optimized contents ratios of Al₂O₃, ZrO₂ and R₂O, for example. Thus, acid resistance of the enamel increases.

Additionally, the enamel composition according to implementations may further include 5 or less wt% of titanium dioxide (TiO₂); 10 or less wt% of stannous oxide (SnO); and 10 or less wt% of zinc oxide (ZnO). Like Al₂O₃, TiO₂ and SnO are components that structurally improve chemical durability of an alkali phosphate-based glass structure, and ZnO is a component that adjusts a surface tension of enamel. In one further embodiment the enamel composition may consist of 30 to 45 wt% of phosphorus pentoxide (P₂O₅),5 to 20 wt% of silicon dioxide (SiO₂), 15 to 30 wt% of aluminum oxide (Al₂O₃), 10 to 20 wt% of zirconium dioxide (ZrO₂), 5 to 20 wt% of at least one of lithium oxide (Li₂O), sodium oxide (Na₂O), or potassium oxide (K₂O), 5 to 15 wt% of boron trioxide (B₂O₃), 10 to 25 wt% of vanadium pentoxide (V₂O₅), 5 or less wt% of titanium dioxide (TiO₂), and 10 or less wt% of at least one of stannous oxide (SnO) or zinc oxide (ZnO).

The enamel composition has a new composition ratio that is described above. Accordingly, in the enamel composition, contaminants may be cleaned in a range of temperatures of 350 to 380 °C which are about 100 °C lower than temperatures at which contaminants are removed in an enamel composition of the related art. Thus, the enamel composition may reduce energy and time spent on cleaning. Further, the enamel composition may facilitate a cleaning of contaminants such as fat and may help to improve hygiene management of a cooking appliance.

A method for preparing enamel composition is described below.

In some implementations, the method for preparing an enamel composition may include supplying the above-described materials for an enamel composition, melting the materials for an enamel composition, and quenching the melted materials for an enamel composition and forming an enamel composition.

The materials may be sufficiently mixed and then melted. The materials for an enamel composition may be melted in a range of temperatures of 1200 to 1400 °C. Additionally, the materials for an enamel composition may be melted for one to two hours.

Then the melted materials for an enamel composition may be rapidly cooled by a chiller, for example, such as a quenching roller. Thus, the enamel composition may be formed.

An example of a cooking appliance is described below.

In some implementations, the enamel composition may be coated on a surface of a target object to be coated. The target object may be all or a portion of a metallic plate, a glass plate, or a cooking appliance, for example. The enamel composition may be coated on an inner surface of a cavity of a cooking appliance, or on an inner surface of a door of a cooking appliance, for example.

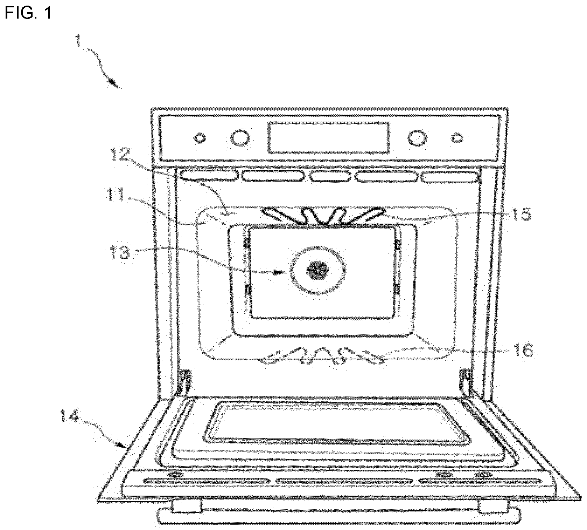

In some implementations, referring to FIG. 1, a cooking appliance 1 may include a cavity 11 in which a cooking chamber is formed, a door 14 that opens and closes the cooking chamber, at least one of heat sources 13, 15, 16 that supplies heat to the cooking chamber, and coating layers formed by the enamel composition according to implementations, which is coated on an inner surface of the cavity 11 or on an inner surface of the door 14.

The cavity 11 may have a cuboid shape, a front surface of which is open. The heat sources 13, 15, 16 may include a convection assembly 13 that discharges heated air into the cavity 11, an upper heater 15 disposed at an upper portion of the cavity 11, and a lower heater 16 disposed at a lower portion of the cavity 11. The upper heater 15 and the lower heater 16 may be provided inside or outside of the cavity 11.

In some implementations, the cooking appliance 1 may not include all of the convection assembly 13, the upper heater 15, and the lower heater 16. For example, the cooking appliance 1 may include any one or more of the convection assembly 13, the upper heater 15, or the lower heater 16. In some examples, the upper heater 15 and the lower heater 16 may include a metal wire or rod that are curved one or more times. In some examples, the convection assembly 13 may include a fan or a blower that supplies hot air to the cavity 11.

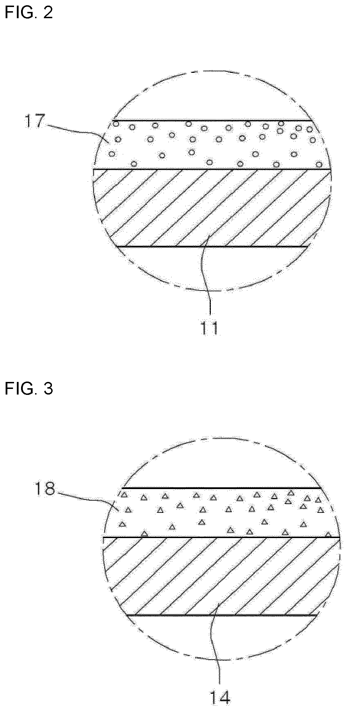

Referring to FIGS. 2 and 3, the enamel composition may be coated on an inner surface of the cavity 11 of the cooking appliance 1 or on an inner surface of the door 14 of the cooking appliance 1 through a dry process or a wet process, for example. The cavity 11 and the door 14 may be formed into a metallic plate. The coating layers 17, 18 formed using the enamel composition according to implementations may be coated directly on the metallic plate in a single layer.

In some implementations, during the dry process, the materials for an enamel composition may be dispersed in an organic binder, the mixed materials and organic binder may be milled in a ball mill, and a glass frit may be manufactured. During the wet process, the materials for an enamel composition may be dispersed in water (H₂O) and pigment, the mixed materials, water (H₂O), and pigment may be milled in a ball mill, and a glass frit may be manufactured.

Then, the glass frit prepared according to the dry process or the wet process may be applied onto the inner surface of the cavity 11 of the cooking appliance 1 or onto the inner surface of the door 14 of the cooking appliance 1 through a spray process, for example. The applied glass frit may be calcinated for 100 to 450 seconds in a range of temperatures of 600 to 900 °C, and may be coated on the inner surface of the cavity 11 of the cooking appliance 1 or on the inner surface of the door 14 of the cooking appliance 1.

Hereinafter, implementations will be described with reference to examples.

One or more examples of enamel compositions are described below.

For example, an enamel composition having a composition ratio described in the following table 1 was prepared. Raw materials of each component were sufficiently mixed for three hours in a V-mixer. Ammonium dihydrogen phosphate (NH₄H₂PO₄) was used as a raw material of P₂O₅. Sodium carbonate (Na₂CO₃), potassium carbonate (K₂CO₃), and lithium carbonate (Li₂CO₃) were respectively used as raw materials for Na₂O, K₂O, and Li₂O. The mixed materials were sufficiently melted for one and a half hours at 1300 °C and were rapidly cooled in a quenching roller. Then a glass cullet was obtained.

For producing frits (powder), initial granularity of the glass cullet obtained through the above-described processes was controlled with the ball mill, was ground for about five hours using a jet mill, and then passed through a 325 mesh sieve (ASTM C285-88) such that a particle diameter of the glass cullet was limited to 45 *µ*m or less.

**Table 1**

| Component (wt %) | Examples according to the disclosure | | | | Comparative examples | |
|---|---|---|---|---|---|---|
| | 1 | 2 | 3 | 4 | 1 | 2 |
| P₂O₅ | 32 | 31 | 33 | 33 | 30 | 25 |
| SiO₂ | 7 | 6 | 5.5 | 5.5 | 12 | 10 |
| Al₂O₃ | 18 | 16.5 | 17 | 17 | 12 | 12 |
| ZrO₂ | 11 | 11 | 11 | 11 | 6 | 6 |
| Na₂O | 6 | 6 | 6 | 6 | 15 | 15 |
| K₂O | 5 | 5 | 5 | 5 | 8 | 8 |
| Li₂O | 2 | 2 | 2 | 2 | 2.7 | 2.7 |
| B₂O₃ | 6.5 | 6.5 | 6.5 | 6.5 | 6 | 6 |
| ZnO | 0 | 1.5 | 0 | 1 | 1 | 1 |
| V₂O₅ | 12.5 | 12.5 | 12.5 | 12.5 | 5 | 12 |
| SnO | 0 | 1.5 | 1 | 0 | 2.3 | 2.3 |
| TiO₂ | 0 | 0.5 | 0.5 | 0.5 | 0 | 0 |

Examples of enamel compositions are described below.

The frits, which were manufactured using the compositions according to examples 1 to 4 above and comparative examples 1 and 2, were respectively sprayed onto a low carbon steel sheet with a width of 200 mm, a height of 200 mm, and a thickness of 1 mm or less using a corona discharge gun. A voltage of the corona discharge gun was controlled under the conditions of 40 kV to 100 kV, and an amount of the frits sprayed on the low carbon steel sheet was 300 g/m². The low carbon steel sheet, onto which the frits were sprayed, was calcinated at temperatures of 830 °C to 870 °C for 300 to 450 seconds to form a coating layer on one surface of the low carbon steel sheet. In this case, the coating layer was formed to have thicknesses of about 80 *µ*m to 250 *µ*m. By doing so, samples were prepared according to examples 1 to 4 and comparative examples 1 and 2.

Experimental results are described below.

Performance of the samples according to the above-described implementations and comparative examples was evaluated as follows. Table 3 shows the results.

The performance of the samples was evaluated based on chemical resistance.

To evaluate acid resistance, a few drops of a 10% citric acid solution were added onto calcinated enamel samples. After 15 minutes passed, the solution was wiped out, and then a change on the surface was observed. An Alkali resistance test was carried out according to the same method as the acid resistance test, and a 10% anhydrous sodium carbonate solution was used as a reagent.

Levels of acid resistance and alkali resistance were evaluated according to the ASTM standard or the ISO 2722 standard, for example. Grade AA denotes excellent, A denotes good, B denotes average, C denotes below average, and D denotes poor.

The performance of the samples was also evaluated based on cleaning performance of chicken fat.

One gram of chicken fat was thinly applied as a contaminant onto a surface of the sample, where a metallic substrate (100×100 mm) was coated with the enamel composition, with a brush evenly. Then, the sample, to which the contaminant was applied, was put into a thermostat and the contaminant was fixed for an hour in a range of temperatures of 250 to 290 °C. After the contaminant was fixed, the sample was cooled naturally and was burned for an hour at a temperature of 350 °C. Then, the hardened contaminant was cleaned with a kitchen scrubber for a frying pan wet with room-temperature water, using a force of 3kgf or less. Cleaned portions of the contaminated surface of the sample were uniformalized using a rod having a flat bottom and a diameter of 5 cm.

The performance of the samples was evaluated based on cleaning performance of monster mash.

A cleaning performance of monster mash was evaluated using the same method as the above-described method.

Frequency of back and forth cleaning motions made to the samples was measured and the frequency was defined as a frequency of back and forth cleaning motions. Table 2 shows indices of evaluation of the cleaning performance.

**Table 2**

| Frequency of back and forth cleaning motions | Level |
|---|---|
| 1 to 5 | LV.5 |
| 6 to 15 | LV.4 |
| 16 to 25 | LV.3 |
| 26 to 50 | LV.2 |
| 51 or more | LV.1 |

**Table 3**

| | Implementation | | | | Comparative example | |
|---|---|---|---|---|---|---|
| | 1 | 2 | 3 | 4 | 1 | 2 |
| Chemical resistance | AA | AA | A | AA | A | D |
| Cleaning performance of chicken fat | LV.5 | LV.5 | LV.5 | LV.5 | LV.2 | LV.4 |
| Cleaning performance of monster mash | LV.5 | LV. 5 | LV.4 | LV.4 | LV.1 | LV.3 |

As shown in FIG. 3, the implementations disclosed herein have an excellent chemical resistance and cleaning performance.

The comparative examples were less excellent in chemical resistance or cleaning performance than the implementations as the comparative examples had a composition less optimal than the composition of the implementations.

Although implementations have been described with reference to a number of illustrative implementations thereof, it should be understood that numerous other modifications and implementations can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An enamel composition, comprising:
30 to 45 wt% of phosphorus pentoxide (P₂O₅);
5 to 20 wt% of silicon dioxide (SiO₂);
15 to 30 wt% of aluminum oxide (Al₂O₃);
10 to 20 wt% of zirconium dioxide (ZrO₂);
5 to 20 wt% of at least one of lithium oxide (Li₂O), sodium oxide (Na₂O), or potassium oxide (K₂O);
5 to 15 wt% of boron trioxide (B₂O₃); and
10 to 25 wt% of vanadium pentoxide (V₂O₅).

2. The enamel composition of claim 1, further comprising:
5 or less wt% of titanium dioxide (TiO₂); and
10 or less wt% of at least one of stannous oxide (SnO) or zinc oxide (ZnO).

3. The enamel composition of claim 1 or 2, wherein the enamel composition comprises:
31 to 33 wt% of P₂O₅;
5.5 to 7 wt% of SiO₂;
16.5 to 18 wt% of Al₂O₃;
11 wt% of ZrO₂;
2 wt% of Li₂O;
6 wt% of Na₂O;
5 wt% of K₂O;
6.5 wt% B₂O₃; and
12.5 wt% V₂O₅.

4. The enamel composition of claim 1, 2 or 3, further comprising 0.5 or less wt% of TiO₂, 1.5 or less wt% of SnO, and 1.5 or less wt% of ZnO.

5. A method for forming an enamel composition, the method comprising:
providing materials for forming the enamel composition, the enamel composition comprising:
30 to 45 wt% of phosphorus pentoxide (P₂O₅),
5 to 20 wt% of silicon dioxide (SiO₂),
15 to 30 wt% of aluminum oxide (Al₂O₃),
10 to 20 wt% of zirconium dioxide (ZrO₂),
5 to 20 wt% of at least one of lithium oxide (Li₂O), sodium oxide (Na₂O), or potassium oxide (K₂O),
5 to 15 wt% of boron trioxide (B₂O₃), and
10 to 25 wt% of vanadium pentoxide (V₂O₅);
melting the materials; and
cooling the melted materials in a quenching roller to thereby form the enamel composition.

6. The method of claim 5, wherein the enamel composition further comprises:
5 or less wt% of titanium dioxide (TiO₂); and
10 or less wt% of at least one of stannous oxide (SnO) or zinc oxide (ZnO).

7. The method of claim 5 or 6, wherein the enamel composition comprises:
31 to 33 wt% of P₂O₅;
5.5 to 7 wt% of SiO₂;
16.5 to 18 wt% of Al₂O₃;
11 wt% of ZrO₂;
2 wt% of Li₂O;
6 wt% of Na₂O;
5 wt% of K₂O;
6.5 wt% B₂O₃; and
12.5 wt% V₂O₅.

8. The method of claim 5, 6 or 7, wherein the enamel composition further comprises 0.5 or less wt% of TiO₂, 1.5 or less wt% of SnO, and 1.5 or less wt% of ZnO.

9. The method according to any one of claims 5 to 8, wherein providing the materials includes providing raw materials comprising at least one of ammonium dihydrogen phosphate (NH4H2PO4), potassium carbonate (K2CO3), and lithium carbonate (Li₂CO₃).

10. The method according to any one of claims 5 to 9, wherein melting the materials is performed at a temperature between 1200 °C and 1400 °C and/or for a time between one to two hours.

11. The method according to any one of claims 5 to 10, further comprising mixing the enamel composition with an organic binder in a ball mill.

12. The method of claim 11, wherein the enamel composition is mixed with water and a pigment in a ball mill.

13. A cooking appliance, comprising:
a chamber surface that defines a cavity (11) forming a cooking chamber;
a door (14) configured to open and close the cavity (11), the door (14) having a door surface facing the cavity (11) in a closed state of the door (14);
a heat source (13, 15, 16) configured to supply heat to the cavity (11); and
a coating layer (17, 18) disposed on at least one of the chamber surface and the door surface, the coating layer formed using the enamel composition according to any one of claims 1 to 4.

14. The cooking appliance of claim 13, wherein the chamber surface and/or the door surface is formed by a metal plate and the coating layer is coated on the metal plate.

15. The cooking appliance of claim 14, wherein the coating layer is a single layer that is in direct contact with the metal plate.

## Patentansprüche

1. Emailzusammensetzung, die Folgendes umfasst:
30 bis 45 Gew.-% Phosphorpentoxid (P₂O₅);
5 bis 20 Gew.-% Siliziumdioxid (SiO₂);
15 bis 30 Gew.-% Aluminiumoxid (Al₂O₃);
10 bis 20 Gew.-% Zirkondioxid (ZrO₂);
5 bis 20 Gew.-% Lithiumoxid (Li₂O) und/oder Natriumoxid (Na₂O) und/oder Kaliumoxid (K₂O);
5 bis 15 Gew.-% Bortrioxid (B₂O₃); und
10 bis 25 Gew.-% Vanadiumpentoxid (V₂O₅).

2. Emailzusammensetzung nach Anspruch 1, die ferner Folgendes umfasst:
5 Gew.-% oder weniger Titandioxid (TiO₂); und
10 Gew.-% oder weniger Zinnoxid (SnO) und/oder Zinkoxid (ZnO).

3. Emailzusammensetzung nach Anspruch 1 oder 2, wobei die Emailzusammensetzung Folgendes umfasst:
31 bis 33 Gew.-% P₂O₅;
5,5 bis 7 Gew.-% SiO₂;
16,5 bis 18 Gew.-% Al₂O₃;
11 Gew.-% ZrO₂;
2 Gew.-% Li₂O;
6 Gew.-% Na₂O;
5 Gew.-% K₂O;
6,5 Gew.-% B₂O₃; und
12,5 Gew.-% V₂O₅.

4. Emailzusammensetzung nach Anspruch 1, 2 oder 3, die ferner 0,5 Gew.-% oder weniger TiO₂, 1,5 Gew.-% oder weniger SnO und 1,5 Gew.-% oder weniger ZnO umfasst.

5. Verfahren zum Bilden einer Emailzusammensetzung, wobei das Verfahren Folgendes umfasst:
Bereitstellen von Materialien zum Bilden der Emailzusammensetzung, wobei die Emailzusammensetzung Folgendes umfasst:
30 bis 45 Gew.-% Phosphorpentoxid (P₂O₅),
5 bis 20 Gew.-% Siliziumdioxid (SiO₂),
15 bis 30 Gew.-% Aluminiumoxid (Al₂O₃),
10 bis 20 Gew.-% Zirkondioxid (ZrO₂),
5 bis 20 Gew.-% Lithiumoxid (Li₂O) und/oder Natriumoxid (Na₂O) und/oder Kaliumoxid (K₂O),
5 bis 15 Gew.-% Bortrioxid (B₂O₃), und
10 bis 25 Gew.-% Vanadiumpentoxid (V₂O₅);
Schmelzen der Materialien; und
Abkühlen der geschmolzenen Materialien in einer Abschreckwalze, um dadurch die Emailzusammensetzung zu bilden.

6. Verfahren nach Anspruch 5, wobei die Emailzusammensetzung ferner Folgendes umfasst:
5 Gew.-% oder weniger Titandioxid (TiO₂); und
10 Gew.-% oder weniger Zinnoxid (SnO) und/oder Zinkoxid (ZnO).

7. Verfahren nach Anspruch 5 oder 6, wobei die Emailzusammensetzung Folgendes umfasst:
31 bis 33 Gew.-% P₂O₅;
5,5 bis 7 Gew.-% SiO₂;
16,5 bis 18 Gew.-% Al₂O₃;
11 Gew.-% ZrO₂;
2 Gew.-% Li₂O;
6 Gew.-% Na₂O;
5 Gew.-% K₂O;
6,5 Gew.-% B₂O₃; und
12,5 Gew.-% V₂O₅.

8. Verfahren nach einem der Ansprüche 5, 6 oder 7, wobei die Emailzusammensetzung ferner 0,5 Gew.-% oder weniger TiO₂, 1,5 Gew.-% oder weniger SnO und 1,5 Gew.-% oder weniger ZnO umfasst.

9. Verfahren nach einem der Ansprüche 5 bis 8, wobei das Bereitstellen der Materialien das Bereitstellen von Rohmaterialien enthält, die Ammoniumdihydrogenphosphat (NH₄H₂PO₄) und/oder Kaliumkarbonat (K₂CO₃) und/oder Lithiumkarbonat (Li₂CO₃) umfassen.

10. Verfahren nach einem der Ansprüche 5 bis 9, wobei das Schmelzen der Materialien bei einer Temperatur im Bereich von 1200 °C bis 1400 °C und/oder für eine Zeit im Bereich von ein bis zwei Stunden durchgeführt wird.

11. Verfahren nach einem der Ansprüche 5 bis 10, das ferner das Mischen der Emailzusammensetzung mit einem organischen Bindemittel in einer Kugelmühle umfasst.

12. Verfahren nach Anspruch 11, wobei die Emailzusammensetzung in einer Kugelmühle mit Wasser und einem Pigment gemischt wird.

13. Kochvorrichtung, die Folgendes umfasst:
eine Kammeroberfläche, die einen Hohlraum (11) definiert, wodurch eine Kochkammer gebildet wird;
eine Tür (14), die konfiguriert ist, den Hohlraum (11) zu öffnen und zu verschließen, wobei die Tür (14) eine Türoberfläche aufweist, die in einem geschlossenen Zustand der Tür (14) dem Hohlraum (11) zugewandt ist;
eine Wärmequelle (13, 15, 16), die konfiguriert ist, dem Hohlraum (11) Wärme zuzuführen; und
eine Beschichtungsschicht (17, 18), die auf der Kammeroberfläche und/oder der Türoberfläche angeordnet ist, wobei die Beschichtungsschicht unter Verwendung der Emailzusammensetzung nach einem der Ansprüche 1 bis 4 gebildet ist.

14. Kochvorrichtung nach Anspruch 13, wobei die Kammeroberfläche und/oder die Türoberfläche durch eine Metallplatte gebildet sind und die Beschichtungsschicht auf der Metallplatte beschichtet ist.

15. Kochvorrichtung nach Anspruch 14, wobei die Beschichtungsschicht eine einzige Schicht ist, die sich in direktem Kontakt mit der Metallplatte befindet.

## Revendications

1. Composition d'émail, comportant :
30 à 45 % en poids de pentoxyde de phosphore (P₂O₅) ;
5 à 20 % en poids de dioxyde de silicium (SiO₂) ;
15 à 30 % en poids d'oxyde d'aluminium (Al₂O₃) ;
10 à 20 % en poids de dioxyde de zirconium (ZrO₂) ;
5 à 20 % en poids d'au moins un élément parmi de l'oxyde de lithium (Li₂O), de l'oxyde de sodium (Na₂O) ou de l'oxyde de potassium (K₂O) ;
5 à 15 % en poids de trioxyde de bore (B₂O₃) ; et
10 à 25 % en poids de pentoxyde de vanadium (V₂O₅).

2. Composition d'émail selon la revendication 1, comportant en outre :
5 % en poids ou moins de dioxyde de titane (TiO₂) ; et
10 % en poids ou moins d'au moins un élément parmi de l'oxyde stanneux (SnO) ou de l'oxyde de zinc (ZnO).

3. Composition d'émail selon la revendication 1 ou 2, dans laquelle la composition d'émail comporte :
31 à 33 % en poids de P₂O₅ ;
5,5 à 7 % en poids de SiO₂ ;
16,5 à 18 % en poids d'Al₂O₃ ;
11 % en poids de ZrO₂ ;
2 % en poids de Li₂O ;
6 % en poids de Na₂O ;
5 % en poids de K₂O ;
6,5 % en poids de B₂O₃ ; et
12,5 % en poids de V₂O₅.

4. Composition d'émail selon la revendication 1, 2 ou 3, comportant en outre 0,5 % en poids ou moins de TiO₂, 1,5 % en poids ou moins de SnO, et 1,5 % en poids ou moins de ZnO.

5. Procédé pour former une composition d'émail, le procédé comportant les étapes consistant à :
fournir des matériaux pour former la composition d'émail, la composition d'émail comportant :
30 à 45 % en poids de pentoxyde de phosphore (P₂O₅),
5 à 20 % en poids de dioxyde de silicium (SiO₂),
15 à 30 % en poids d'oxyde d'aluminium (Al₂O₃),
10 à 20 % en poids de dioxyde de zirconium (ZrO₂),
5 à 20 % en poids d'au moins un élément parmi de l'oxyde de lithium (Li₂O), de l'oxyde de sodium (Na₂O) ou de l'oxyde de potassium (K₂O),
5 à 15 % en poids de trioxyde de bore (B₂O₃), et
10 à 25 % en poids de pentoxyde de vanadium (V₂O₅) ;
faire fondre les matériaux, et
refroidir les matériaux fondus dans un rouleau de trempe pour ainsi former la composition d'émail.

6. Procédé selon la revendication 5, dans lequel la composition d'émail comporte en outre
5 % en poids ou moins de dioxyde de titane (TiO₂) ; et
10 % en poids ou moins d'au moins un élément parmi de l'oxyde stanneux (SnO) ou de l'oxyde de zinc (ZnO).

7. Procédé selon la revendication 5 ou 6, dans lequel la composition d'émail comporte :
31 à 33 % en poids de P₂O₅ ;
5,5 à 7 % en poids de SiO₂ ;
16,5 à 18 % en poids d'Al₂O₃ ;
11 % en poids de ZrO₂ ;
2 % en poids de Li₂O ;
6 % en poids de Na₂O ;
5 % en poids de K₂O ;
6,5 % en poids de B₂O₃ ; et
12,5 % en poids de V₂O₅.

8. Procédé selon la revendication 5, 6 ou 7, dans lequel la composition d'émail comporte en outre 0,5 % en poids ou moins de TiO₂, 1,5 % en poids ou moins de SnO, et 1,5 % en poids ou moins de ZnO

9. Procédé selon l'une quelconque des revendications 5 à 8, dans lequel la fourniture des matériaux inclut la fourniture de matières premières comportant au moins un élément parmi du dihydrogénophosphate d'ammonium (NH₄H₂PO₄), du carbonate de potassium (K₂CO₃) et du carbonate de lithium (Li₂CO₃).

10. Procédé selon l'une quelconque des revendications 5 à 9, dans lequel la fonte des matériaux est réalisée à une température comprise entre 1 200 °C et 1 400 °C et/ou pendant une durée comprise entre une et deux heures.

11. Procédé selon l'une quelconque des revendications 5 à 10, comportant en outre le mélange de la composition d'émail avec un liant organique dans un broyeur à boulets.

12. Procédé selon la revendication 11, dans lequel la composition d'émail est mélangée avec de l'eau et un pigment dans un broyeur à boulets.

13. Appareil de cuisson, comportant :
une surface de chambre qui définit une cavité (11) formant une chambre de cuisson ;
une porte (14) configurée pour ouvrir et fermer la cavité (11), la porte (14) ayant une surface de porte dirigée vers la cavité (11) dans un état fermé de la porte (14) ;
une source de chaleur (13, 15, 16) configurée pour fournir de la chaleur à la cavité (11) ; et
une couche de revêtement (17, 18) disposée sur au moins une surface parmi la surface de chambre et la surface de porte, la couche de revêtement étant formée en utilisant la composition d'émail selon l'une quelconque des revendications 1 à 4.

14. Appareil de cuisson selon la revendication 13, dans lequel la surface de chambre et/ou la surface de porte est formée par une plaque métallique et la couche de revêtement est déposée sur la plaque métallique.

15. Appareil de cuisson selon la revendication 14, dans lequel la couche de revêtement est une couche unique qui est en contact direct avec la plaque métallique.
